# EUROPEAN PATENT APPLICATION

(11) **EP 4 607 875 A1**
(43) Date of publication of application: **27.08.2025**
(21) Application number: 24799474.2
(22) Date of filing: 18.10.2024
(51) Int. Cl.: H04L 41/0663, G06F 11/14

(54) **HOT STANDBY METHOD AND SYSTEM FOR INTEGRATED DRIVER MACHINE INTERFACE DEVICES**

(30) Priority: 05.01.2024 CN 202410021782
(71) Applicant: CRSC RESEARCH & DESIGN INSTITUTE GROUP CO., LTD., Fengtai District Beijing 100070 (CN)
(72) Inventor: TAN, Yuru, Beijing 100070 (CN); ZHU, Zhicheng, Beijing 100070 (CN); CHEN, Zhiqiang, Beijing 100070 (CN); WANG, Jianmin, Beijing 100070 (CN); MENG, Fanyong, Beijing 100070 (CN); YAN, Kongxuan, Beijing 100070 (CN)
(74) Representative: Haseltine Lake Kempner LLP
(86) International application number: PCT/CN2024/125679
(87) International publication number: WO 2025/145735

(57) **Abstract**

The invention discloses a hot standby method and system of an integrated driver machine interface device. The method comprises: firstly, determining a main system and a standby system of two driver machine interface devices in hot standby mode, wherein the driver machine interface device for the main system includes a main screen, and the driver machine interface device for the standby system includes a standby screen; then, registering, by the main screen, a first bus port through which the driver machine interface device for the main system communicates with an on-board device, establishing communication connection and information interaction with the on-board device, transparently transmitting the received information interaction content of the on-board device to the standby screen through Ethernet communication for synchronous display, and simultaneously sending the received reply content from the standby screen to the on-board device through the first bus port. The hot standby method ensures real-time consistency of driver machine interface display, and adopts a set of first bus ports communicating with on-board device, thereby reducing resource occupation and greatly improving usability of the system.

## Description

### TECHNICAL FIELD

The invention belongs to the rail transit field, and in particular relates to a hot standby method and system of an integrated driver machine interface device.

### BACKGROUND

In recent years, urban rail transit has developed rapidly. As domestic urban rail vehicles gradually develop toward comfortable and intelligent direction, train functions become more and more abundant, more and more devices, and the information that needs to be exchanged is more complex. In the existing high-speed train control system's an on-board device, the Driver Machine Interface (DMI) device plays a crucial role as the bridge between the driver and the on-board host. Two traditional driver machine interface devices are needed to realize the hot standby function, but it occupies a large space area. Further, when two traditional driver machine interface devices communicate with on-board devices, two sets of communication devices are also required, which is high in cost and complicated in wiring.

Therefore, how to provide a driver machine interface device with small space occupation and high usability has become an urgent technical problem that needs to be solved.

### SUMMARY

In view of the above problems, the present invention provides a hot standby method and system for an integrated driver machine interface device, which have small space occupation and high usability.

The invention aims to provide a hot standby method of an integrated driver machine interface device, comprising:

Determining a main system and a standby system of two driver machine interface devices in a hot standby mode, wherein the main system driver machine interface device for the main system includes a main screen, and the driver machine interface device for the standby system includes a standby screen;

Registering, by the main screen, a first bus port through which the driver machine interface device for the main system communicates to the on-board device, establishing communication connection and information interaction with the on-board device, and transparently transmitting the received information interaction content of the on-board device to the standby screen through Ethernet communication for synchronous display, and simultaneously sending the received reply content from the standby screen to the on-board device through the first bus port.

Further, the method further comprises:
If the main screen fails, registering, by the standby screen, the first bus port through which the driver machine interface device communicates with the on-board device, and establishing a communication connection and information interaction with the on-board device.

Further, determining the main system and the standby system of the two driver machine interface devices in the hot standby mode includes:
Determining respective independent identifications of the two driver machine interface devices;
Based on the independent identifications, the identifications representing the main screen of the driver machine interface device for the main system to display main screen interface's content, and the identifications represent the standby screen of the driver machine interface device for the standby system to display standby screen interface's content.

Further, the information interaction includes window information interaction, and the hot standby method comprises:
Sending, by the on-board device, window information to the main screen;
Receiving, window information and transmitting the received window information to the standby screen by the main screen.

Popping up, by the main screen and the standby screen together, corresponding windows, for an operator to perform operations in a window interface of the main screen and operation information is replied to the on-board device; for the operator to perform operations in the window interface of the standby screen, and after the operations are completed, the operation information is transparently transmitted by the standby screen to the main screen, to be replied by the main screen to the on-board device.

Further, if the operations have not been completed and the corresponding driver machine interface device fails when the operations are being performed by the operator in a window interface, another driver machine interface device enters an independent display state as the main system, and pops up the corresponding window interface for the operator to continue to complete the operations, and replies the operation information to the on-board device.

Further, the information interaction includes text information interaction, and the hot standby method includes:
Sending, by the on-board device, text information that needs to be confirmed by the operator to the main screen, and receiving the text information and transparently transmitting the received text information to the standby screen by the main screen.

Completing, by the operator, an operation response to the text information on the main screen and replying the operation information to the on-board device;
Completing, by the operator, the operation response to the text information on the standby screen and transparently transmitting the operation information to the main screen, to be replied by the main screen to the on-board device.

Further, when the communication connection of the two driver machine interface devices is normal, the text information is displayed by the main screen, and only display and removal of the text information are recorded by the standby screen.

Further, the method further comprises:
Detecting, by of two driver machine interface devices, their life signals each other. If one of the driver machine interface devices fails, actively commanding, by the driver machine interface device which fails, another driver machine interface device to take over interface display task of the entire on-board device and enter an independent display state; or,
If one of the driver machine interface devices detects a fault in another driver machine interface device, actively taking over, by the one of the driver machine interface devices, interface display task of the entire on-board device and entering an independent display state.

Another object of the present invention is to provide a hot standby system for an integrated driver machine interface device, the hot standby system comprising an on-board device, two driver machine interface devices and two power supplies, wherein the on-board device and the two driver machine interface devices are connected through a first bus, and the two driver machine interface devices communicate through Ethernet, and the two driver machine interface devices are also connected to corresponding power supplies respectively, wherein,
The two driver machine interface devices are integrated, and the two driver machine interface devices share a set of first bus ports for communicating with the on-board device.

Further, the two driver machine interface devices are used to determine a main system and a standby system of the two driver machine interface devices in a hot standby mode, wherein the driver machine interface device for the main system includes a main screen, and the driver machine interface device for the standby system includes a standby screen;
The main screen is used to register the first bus port through which the driver machine interface device for the main system communicates with the on-board device, establish communication connection and information interaction with the on-board device, and transparently transmit the received information interaction content from the on-board device to the standby screen for synchronous display, and simultaneously send the received reply content from the standby screen to the on-board device through the first bus port.

Further, if the main screen fails, the standby screen is used to register the first bus port through which the driver machine interface device for the standby system communicates with the on-board device, and establish a communication connection and information interaction with the on-board device.

Further, the two driver machine interface devices adopt different software configurations with the corresponding power supplies, representing respective independent identifications of the two driver machine interface devices; wherein,
The identifications represent the main screen of the driver machine interface device of the main system to display the main screen interface content, and the identifications represent the standby screen of the driver machine interface device of the standby system to display the standby screen interface content.

Further, the information interaction includes window information interaction, wherein,
The on-board device is used to send window information to the main screen;
The main screen is used to receive window information and transparently transmit the received window information to the standby screen.

The main screen and the standby screen are also used to pop up corresponding windows together, for an operator to perform operations in a window interface of the main screen and operation information is replied to the on-board device; for the operator to perform operations in the window interface of the standby screen, and after the operations are completed, the operation information is transparently transmitted by the standby screen to the main screen, to be replied by the main screen to the on-board device.

Further, the information interaction includes text information interaction, wherein,
The on-board device is used to send text information that needs to be confirmed by the operator to the main screen;
The main screen is used to receive the text information and transparently transmit the received text information to the standby screen;
An operation response to the text information is completed by the operator on the main screen and operation information is replied to the on-board device;
The operation response to the text information is completed by the operator on the standby screen, the operation information is transparently transmitted to the main screen, to be replied by the main screen to the on-board device.

Further, when the communication connection between the two driver machine interface devices is normal, text information is displayed on the main screen, and only display and removal of the text information are recorded by the standby screen.

Further, the two driver machine interface devices are also used to detect their life signals each other. If one of the driver machine interface devices fails, the driver machine interface device which fails actively commands another driver machine interface device to take over the interface display task of the entire on-board device and enter independent display state; or,
If one of the driver machine interface devices detects a fault in another driver machine interface device, the driver machine interface device actively takes over interface display task of the entire on-board device and enters an independent display state.

Further, the driver machine interfaces of the two driver machine interface devices are provided with switch buttons, which are used to display, when one driver machine interface device fails, the driver machine interface's content on the driver machine interface device which fails on the driver machine interface of the other driver machine interface device by clicking the switch button.

In the hot standby method described in the invention, only the main screen registers the first bus port through which the main system driver machine interface device communicates with the on-board device, so that the main screen and the standby screen are used to process the information interaction content sent from the on-board device by a set of first bus ports, and synchronously display the information interaction content on the main screen, guaranteeing the real-time consistency of the display of the driver machine interface's interface.

In addition, double-screen mode is adopted between the main screen and the standby screen. When an abnormal life signal of one of the main screen and the standby screen is detected, the main screen and the standby screen can take over the driver machine interface of the abnormal driver machine interface device, enters an independent display state, and actively takes over the interface display task of the entire on-board device, or switches the interface's content on the driver machine interface device which fails to the normal driver machine interface device through the switch button, thereby guaranteeing the real-time and integrity of the driver machine interface display and guaranteeing the safety of train movement.

Additional features and advantages of the invention will be set forth in the following description, and in part will be obvious from the description, or may be learned by practice of the invention. The objectives and other advantages of the invention may be realized and attained by the structure particularly pointed out in the written description and claims hereof as well as the appended drawings.

### BRIEF DESCRIPTION OF DRAWINGS

In order to explain the embodiments of the present invention or the technical solutions in the prior art more clearly, the drawings needed to be used in the description of the embodiments or the prior art will be briefly introduced below. Obviously, the drawings in the following description are the present invention for some embodiments of the invention, those of ordinary skill in the art can also obtain other drawings based on these drawings without exerting creative efforts.
Fig. 1 shows a schematic flow diagram of a hot standby method for an integrated driver machine interface device in an embodiment of the present invention;
Fig. 2 shows a schematic structural diagram of a dual-screen mode of an integrated driver machine interface device in an embodiment of the present invention;
Fig. 3 shows a schematic structural diagram of another integrated driver machine interface device in a dual-screen mode in an embodiment of the present invention;
Fig. 4 shows a schematic structural diagram of a hot standby system of an integrated driver machine interface device in an embodiment of the present invention.

### DETAILED DESCRIPTION

In order to make the purpose, technical solutions and advantages of the embodiments of the present invention clearer, the technical solutions in the embodiments of the present invention will be clearly and completely described below with reference to the drawings in the embodiments of the present invention. Obviously, the described embodiments are some embodiments of the present invention, not all embodiments. Based on the embodiments of the present invention, all other embodiments obtained by those of ordinary skill in the art without creative efforts fall within the scope of protection of the present invention.

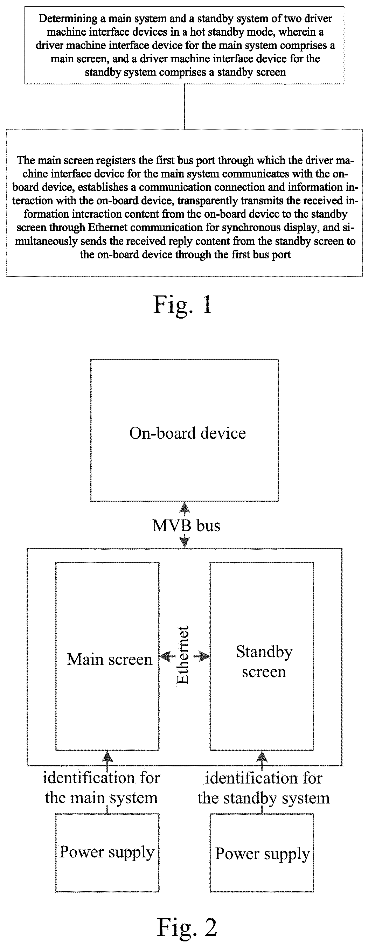

As shown in Fig. 1, an embodiment of the present invention discloses a hot standby method of an integrated driver machine interface device. The method includes: first, a main system and a standby system of two driver machine interface devices in a hot standby mode are determined, wherein the driver machine interface device for the main system includes a main screen, and the driver machine interface device for the standby system includes a standby screen; then, the main screen registers the first bus port through which the driver machine interface device for the main system communicates with the on-board device, establishes a communication connection and information interaction with the on-board device, and transparently transmits the received information interaction content from the on-board device to the standby screen through Ethernet communication for synchronous display, and simultaneously sends the received reply content from the standby screen to the on-board device through the first bus port. In the hot standby method, only the main screen registers the first bus port through which the driver machine interface device for the main system communicates with the on-board device, so that the main screen and the standby screen process the information interaction content sent from the on-board device by a set of first bus ports, and the main screen and the standby screen display the information interaction content synchronously, thereby guaranteeing the real-time consistency of the display of the driver machine interface's interface.

In some embodiments of the present invention, the first bus port is an MVB (multifunction vehicle bus) bus port, and the following contents are all exemplified using the MVB bus port.

The hot standby method also includes: if the main screen fails, the standby screen registers the MVB bus port of the driver machine interface device for the standby system and the on-board device and establishes communication connection and information interaction with the on-board device, and does not rely on the main screen to transparently transmit data through Ethernet communication. The on-board device may be an ATP (Automatic Train Protection) on-board device, and the two driver machine interface devices are provided with a set of MVB bus ports, and then connected to the on-board device through the MVB bus. Transparent transmission refers to transmitting data packets to the target device intact without any processing or parsing of the data packets during communication. Therefore, the real-time consistency of the display content on the driver machine interface device interfaces for main and standby screen is ensured by using transparent transmission. Further, when two driver machine interface devices in the integrated driver machine interface device communicate with ATP (Automatic Train Protection) on-board device, a set of MVB bus ports is adopted, which greatly reduces system space occupation in communication connection of hot standby driver machine interface devices. In addition, all driver machine interface devices that establish communication connection with ATP on-board device need to register with MVB bus port, which ensures the safety of train in hot standby operation and the practicability of on-board device system, and improves the driver's experience.

In some embodiments of the present invention, the determining the main system and the standby system of the two driver machine interface devices in the hot standby mode includes: first, respective independent identifications of the two driver machine interface devices are determined, and then, based on the respective independent identifications, the identifications represent the main screen of the driver machine interface device of the main system to display the main screen interface's content, and the identifications represent the standby screen of the driver machine interface device of the standby system to display the standby screen interface's content. As shown in Fig. 2, the integrated driver machine interface device is set in dual-screen mode, and the main screen or standby screen (also called driver machine interface DMI: driver machine interface) of the said two driver machine interface devices are connected to corresponding power supplies, and software configurations between the two driver machine interface devices with the corresponding power supplies are different, so it can be determined that their identifications are different. The software configurations can include the models of the main screen and the standby screen, but is not limited thereto. Serial numbers of the main screen and the standby screen are also applicable to the present invention. For example, based on the software configurations of two driver machine interface devices, the serial number of the left screen (the driver machine interface device on the left side of the integrated driver machine interface device) represents the main screen, and the serial number of the right screen (the driver machine interface device on the right side of the integrated driver machine interface device) represents the standby screen, and the communication connection and data transmission are carried out between the two screens through Ethernet. The setting of the dual-screen can display communication content normally when one of the driver machine interfaces is abnormal, another one of the driver machine interfaces can still display communication content normally, improving the reliability of communication interaction of redundant driver machine interface devices.

The information interaction includes window information interaction and text information interaction. When the on-board device and the driver machine interface device perform window information interaction, the steps of the hot standby method include: first, the on-board device sends the window information to the home screen; then, the main screen receives window information and transparently transmits the received window information to the standby screen; finally, the main screen and the standby screen pop up corresponding windows together, for an operator to perform operations in a window interface of the main screen and operation information is replied to the on-board device; for the operator to perform operations in the window interface of the standby screen, and after the operations are completed, the operation information is transparently transmitted by the standby screen to the main screen, to be replied by the main screen to the on-board device. Further, if the operations have not been completed and the corresponding driver machine interface device fails when the operations are being performed by the operator in one window interface, another driver machine interface device enters an independent display state as the main system, and pops up the corresponding window interface for the operator to continue to complete the operations and replies the operation information to the on-board device. The hot standby mode of driver machine interface device includes the hot standby switching of interface content display, which guarantees the reliability and safety of train movement. Preferably, if both driver machine interface devices are in a normal state, the interface displayed content cannot be switched between the main screen and the standby screen.

During the train movement, when the on-board device and the driver machine interface device perform the text information interaction, the steps of the hot standby method include: first, the on-board device sends text information that needs to be confirmed by the operator to the main screen, and the main screen receives the text information, and transparently transmits the received text information to the standby screen; then, the operator completes the operation response to the text information on the main screen and replies the operation information to the on-board device; the operator also completes the operation response to the text information on the standby screen, and transparently transmits the operation information to the main screen, to be replied by the main screen to the on-board device. When the communication connection between the two driver machine interface devices is normal, the text information is displayed on the main screen, and only display and removal of the text information are recorded by the standby screen.

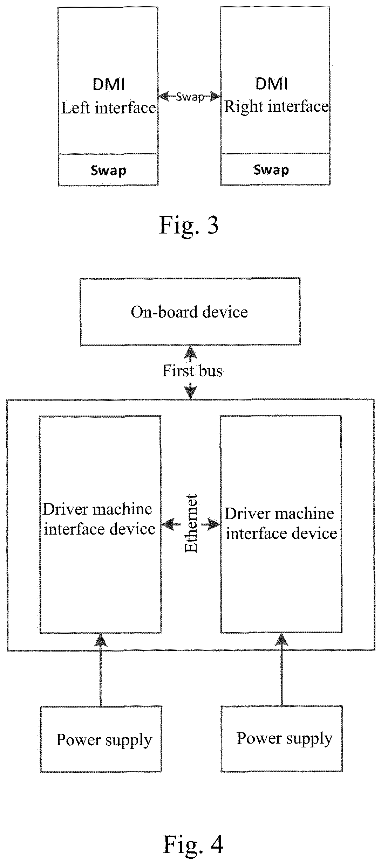

In some embodiments of the present invention, the hot standby method further includes two driver machine interface devices detect their life signals each other. If one of the driver machine interface devices fails, the driver machine interface device which fails actively commands another driver machine interface device to take over interface display task of the entire on-board device and enter an independent display state; or, if one of the driver machine interface devices detects a fault in another driver machine interface device, the one of the driver machine interface devices actively takes over the interface display task of the entire on-board device and enters an independent display state. If one of the driver machine interface devices fails, another driver machine interface device enables the hot standby switch function, and takes over the driver machine interface display task of the entire on-board device system by the hot standby switch mechanism, thereby guaranteeing the safety of train movement. Preferably, as shown in Fig. 3, the driver machine interface's interfaces add a switch button (Swap) function. If one of the driver machine interface devices fails and another driver machine interface device enables the hot standby switch function, the interface device can not only display the left screen content, but also display right screen content; the driver can use the Swap switch button to switch the screen content display. Therefore, by clicking the switch button on the driver machine interface device interfaces, the display switching of the left and right interfaces of the driver machine interface's interface can be realized, effectively realizing the independent display of the content of the driver machine interface on a single screen, and guaranteeing the reliability of the driver machine interface device. However, it should be noted that if the communication between the two driver machine interface devices is normal, the Swap switch button will not appear on the driver machine interface, and only the left screen content can be displayed on the left interface of the driver machine interface device, and only the right screen content can be displayed on the right interface of the driver machine interface device.

As shown in Fig. 4, an embodiment of the present invention also discloses a hot standby system of an integrated driver machine interface device capable of executing the above hot standby method, the system includes: an on-board device, two driver machine interface devices and two power supplies, the on-board device is connected to the two driver machine interface devices through a first bus, the two driver machine interface devices communicate through Ethernet, and the two driver machine interface devices are also connected to corresponding power supplies respectively, wherein the two driver machine interface devices are integrated, and the two driver machine interface devices share a set of first bus ports for communicating with the on-board device. Further, Ethernet communication is used between the two driver machine interface devices, but it is not limited to this. Other bus communications are also applicable to the present invention. Preferably, the driver machine interface (also called screen, main screen or standby screen) of the two driver machine interfaces only occupies half of the screen of the traditional driver machine interface device. When communication between the two driver machine interface devices and communication of the two driver machine interface devices with the on-board device respectively are normal, the two devices can be combined to display normal driver machine interface content. Two driver machine interface devices in the integrated driver machine interface device adopt a set of first bus ports when communicating with the on-board device, thereby reducing the space occupation used for communication connection in the hot standby driver machine interface device.

In some embodiments of the present invention, said two driver machine interface devices are used to determine the main system and the standby system of the two driver machine interface devices in the hot standby mode, wherein the driver machine interface device for the main system includes a main screen, and the driver machine interface device for the standby system includes a standby screen. That is, the driver machine interface (screen) of the driver machine interface device for the main system is the main screen, and the driver machine interface (screen) of the driver machine interface device for the standby system is the standby screen. Further, the main screen is used to register the first bus port through which the driver machine interface device for the main system communicates with the on-board device, establish a communication connection and information interaction with the on-board device, and transparently transmit the received information interaction content from the on-board device to the standby screen for synchronous display, and simultaneously send the received reply content from the standby screen to the on-board device through the first bus port. The main screen and the standby screen process a set of data sent by the on-board device to the first port, and synchronously display them on the driver machine interfaces of the driver machine interface devices for the main screen and standby screen according to the communication data, guaranteeing the real-time consistency of the driver machine interface display of the two driver machine interface devices, and improving the safety of train movement.

In some embodiments of the present invention, if the main screen fails, the standby screen is used to register the first bus port through which the driver machine interface device communicates with the on-board device, and establish a communication connection and information interaction with the on-board device. When the main screen fails, the driver machine interface devices perform hot standby switching, thereby guaranteeing the safety of train movement.

In some embodiments of the present invention, the two driver machine interface devices respectively use different software configurations with the corresponding power supplies. Different software configurations represent respective independent identifications of the two driver machine interface devices. For example, the two driver machine interface devices use different device models, but are not limited thereto, or different serial numbers, etc. are applicable to the present invention. The identifications are to display the main screen interface's content on the main screen of the driver machine interface device of the main system, and the identifications are to display the standby screen interface's content on the standby screen of the driver machine interface device of the standby system.

The said information interaction includes window information interaction. During the operation of the on-board device, the on-board device is used to send window information to the main screen. The main screen is used to receive window information and transparently transmit the received window information to the standby screen. The main screen and the standby screen are also used to pop up corresponding windows together, for an operator to perform operations in a window interface of the main screen and operation information is replied to the on-board device; for the operator to perform operations in the window interface of the standby screen, and after the operations are completed, the operation information is transparently transmitted by the standby screen to the main screen, to be replied by the main screen to the on-board device. If the operations have not been completed and one of the driver machine interface devices fails when the operations are being performed by the operator in a certain window interface, another driver machine interface device enters the independent display state, and the driver machine interface device that enters the independent display state continues to remain in that window to complete the operations, and replies the operation information to the on-board device. If one of the driver machine interface devices fails, another driver machine interface device displays the driver machine interface of the driver machine interface device which fails, including displaying an uncompleted corresponding window for the operator to complete.

The said information interaction includes text information interaction. During train movement, the on-board device is used to send text information that needs to be confirmed by the operator to the main screen. The main screen is used to receive text information and transparently transmit the received text information to the standby screen. The operator completes the operation response to the text information on the main screen and replies the operation information to the on-board device. The operator also completes the operation response to the text information on the standby screen, and transparently transmits the operation information to the main screen, to be replied by the main screen to the on-board device. Further, when the communication connection of the two driver machine interface devices is normal, the text information is displayed on the main screen, and only display and removal of the text information are recorded by the standby screen.

The two driver machine interface devices are also used to detect their life signals each other. If one of the driver machine interface devices fails, the driver machine interface device which fails actively commands another driver machine interface device to take over the interface display task of the entire on-board device, and enters independent display state; or, if one driver machine interface device detects a fault in another driver machine interface device, the one of the driver machine interface devices actively takes over the interface display task of the entire on-board device and enters an independent display state. When one of the driver machine interface devices fails, another driver machine interface device independently displays the normal driver machine interface, and even displays the corresponding window that is operating of the driver machine interface which fails for the operator to operate, thereby guaranteeing the integrity and availability of the driver machine interface display, and improving the reliability of the system and guaranteeing the safety of the train movement.

In some embodiments of the present invention, a switch button (Swap) function is added to the driver machine interface's interface. If one of the driver machine interface devices fails and the hot standby switch function of another driver machine interface device is enabled, the interface device can not only display the left screen content, but also display the right screen content. The driver can switch the display of the screen content through the Swap switch button. Therefore, by clicking the switching button on the driver machine interface device interface, the display switching between the left and right interfaces of the driver machine interface's interface can also be realized, effectively realizing the independent display of the content of the driver machine interface on a single screen, and guaranteeing the reliability of the driver machine interface device operation. However, it should be noted that if the communication between the two driver machine interface devices is normal, the Swap switch button will not appear on the driver machine interface, and only the left screen content can be displayed on the left interface of the driver machine interface device, and only the right screen content can be displayed on the right interface of the driver machine interface device.

In some embodiments of the present invention, the first bus port adopts an MVB (multifunction vehicle bus) bus port, and the first bus adopts an MVB bus, but is not limited thereto, such as a CAN communication bus port, CAN communication bus and other bus ports and buses are also applicable to the present invention.

The two driver machine interface devices share a set of MVB ports for communicating with ATP on-board devices. When the communication connection between the two driver machine interface devices communicate is normal, the main screen (driver machine interface of the driver machine interface for the main system) transparently transmits the received communication content from ATP on-board devices to the standby screen through Ethernet communication data for synchronous display, thereby guaranteeing the real-time consistency of the displayed content on the driver machine interface of the hot standby driver machine interface device. In addition, the double-screen mode can be adopted between the main screen and the standby screen. When an abnormal life signal of one of the main screen and the standby screen is detected, the main screen and the standby screen can take over the driver machine interface of the abnormal driver machine interface device, enters an independent display state, and actively takes over the interface display task of the entire on-board device, or switches the interface content on the failed driver machine interface device to the normal driver machine interface device through the switch button, thereby guaranteeing the real-time and integrity of the driver machine interface display and guaranteeing the safety of train movement.

Although the present invention has been described in detail with reference to the foregoing embodiments, those of ordinary skill in the art should understand that they can still modify the technical solutions described in the foregoing embodiments, or replace some of the technical features with equivalents. However, these modifications or substitutions do not cause the essence of the corresponding technical solution to deviate from the spirit and scope of the technical solution of each embodiment of the present invention.

## Claims

1. A hot standby method for an integrated driver machine interface device, comprising:
determining a main system and a standby system of two driver machine interface devices in hot standby mode, wherein a driver machine interface device for the main system includes a main screen, and a driver machine interface device for the standby system includes a standby screen;
registering, by the main screen, a first bus port through which the driver machine interface device for the main system communicates with an on-board device, establishing communication connection and information interaction with the on-board device, transparently transmitting the received information interaction content from the on-board device to the standby screen through Ethernet communication for synchronous display, and simultaneously sending the received reply content from the standby screen to the on-board device through the first bus port.

2. The hot standby method for the integrated driver machine interface device as claimed in claim 1, further comprising,
if the main screen fails, registering, by the standby screen, the first bus port through which the driver machine interface device for the standby system communicates with the on-board device, and establishing communication connection and information interaction with the on-board device.

3. The hot standby method for the integrated driver machine interface device as claimed in claim 2, wherein the determining the main system and the standby system of the two driver machine interface devices in the hot standby mode comprises:
determining respective independent identifications of the two driver machine interface devices;
based on the respective independent identifications, the identifications representing the main screen of the driver machine interface device of the main system to display main screen interface's content, and the identifications representing the standby screen of the driver machine interface device of the standby system to display standby screen interface's content.

4. The hot standby method for the integrated driver machine interface device as claimed in any one of claims 2-3, wherein the information interaction includes window information interaction, and the hot standby method comprises:
sending, by the on-board device, window information to the main screen;
receiving the window information and transparently transmitting the received window information to the standby screen by the main screen;
popping up, by the main screen and the standby screen together, corresponding windows, for an operator to perform operations in a window interface of the main screen and operation information is replied to the on-board device; for the operator to perform operations in the window interface of the standby screen, and after the operations are completed, the operation information is transparently transmitted by the standby screen to the main screen, to be replied by the main screen to the on-board device.

5. The hot standby method for the integrated driver machine interface device as claimed in claim 4, wherein if the operations have not been completed and the corresponding driver machine interface device fails when the operations are being performed by the operator in one window interface, then another driver machine interface device enters an independent display state as the main system, pops up the corresponding window interface for the operator to continue to complete the operations, and replies the operation information to the on-board device.

6. The hot standby method for the integrated driver machine interface device as claimed in any one of claims 2-3, wherein the information interaction includes text information interaction, and the hot standby method comprises:
sending, by the on-board device, text information that needs to be confirmed by an operator to the main screen, and receiving the text information and transparently transmitting the received text information to the standby screen by the main screen;
completing, by the operator, an operation response to the text information on the main screen and replying an operation information to the on-board device;
completing, by the operator, the operation response to the text information on the standby screen, and transparently transmitting the operation information to the main screen, to be replied by the main screen to the on-board device.

7. The hot standby method for the integrated driver machine interface device as claimed in claim 6, wherein when the communication connection of the two driver machine interface devices is normal, the text information is displayed by the main screen, and only display and removal of the text information are recorded by the standby screen.

8. The hot standby method for the integrated driver machine interface device as claimed in claim 3, further comprising:
detecting, by two driver machine interface devices, their life signals each other, and if one of the driver machine interface devices fails, actively commanding, by the driver machine interface device which fails, another driver machine interface device to take over interface display task of the entire on-board device and enter an independent display state; or,
if one of the driver machine interface devices detects a fault in another driver machine interface device, actively taking over, by the one of the driver machine interface devices, interface display task of the entire on-board device and entering an independent display state.

9. A hot standby system for an integrated driver machine interface device, the hot standby system comprising an on-board device, two driver machine interface devices and two power supplies, wherein the on-board device and the two driver machine interface devices are connected through a first bus, the two driver machine interface devices communicate through Ethernet, and the two driver machine interface devices are also connected to corresponding power supplies respectively, wherein,
the two driver machine interface devices are integrated, and the two driver machine interface devices share a set of first bus ports for communicating with the on-board device.

10. The hot standby system of the integrated driver machine interface device as claimed in claim 9, wherein the two driver machine interface devices are used to determine a main system and a standby system of the two driver machine interface devices in a hot standby mode, wherein the driver machine interface device for the main system includes a main screen, and the driver machine interface device for the standby system includes a standby screen;
the main screen is used to register a first bus port through which the driver machine interface device for the main system communicates with the on-board device, establish communication connection and information interaction with the on-board device, and transparently transmit the received information interaction content from the on-board device to the standby screen for synchronous display, and simultaneously send the received reply content from the standby screen to the on-board device through the first bus port.

11. The hot standby system of the integrated driver machine interface device as claimed in claim 10, wherein if the main screen fails, the standby screen is used to register the first bus port through which the driver machine interface device for the standby system communicates with the on-board device, and establish a communication connection and information interaction with the on-board device.

12. The hot standby system of the integrated driver machine interface device as claimed in claim 11, wherein the two driver machine interface devices use different software configurations with the corresponding power supplies, representing respective independent identifications of the two driver machine interface devices; wherein,
the identifications represent the main screen of the driver machine interface device for the main system to display a main screen interface's content, and the identifications represent the standby screen of the driver machine interface device for the standby system to display a standby screen interface's content.

13. The hot standby system of the integrated driver machine interface device as claimed in claim 12, wherein the information interaction includes window information interaction, wherein,
the on-board device is used to send window information to the main screen;
the main screen is used to receive window information and transparently transmit the received window information to the standby screen;
the main screen and the standby screen are also used to pop up corresponding windows together, for an operator to perform operations in a window interface of the main screen and operation information is replied to the on-board device; for the operator to perform operations in the window interface of the standby screen, and after the operations are completed, the operation information is transparently transmitted by the standby screen to the main screen, to be replied by the main screen to the on-board device.

14. The hot standby system of the integrated driver machine interface device as claimed in claim 13, wherein the information interaction includes text information interaction, wherein,
the on-board device is used to send text information that needs to be confirmed by an operator to the main screen;
the main screen is used to receive the text information and transparently transmit the received text information to the standby screen;
an operation response to the text information is completed by the operator on the main screen and operation information is replied to the on-board device;
the operation response to the text information is completed by the operator on the standby screen, the operation information is transparently transmitted to the main screen, to be replied by the main screen to the on-board device.

15. The hot standby system of the integrated driver machine interface device as claimed in claim 14, wherein when the communication connection of the two driver machine interface devices is normal, the text information is displayed by the main screen, and only display and removal of the text information are recorded by the standby screen.

16. The hot standby system of the integrated driver machine interface device as claimed in any one of claims 9-15, wherein the two driver machine interface devices are also used to detect their life signals each other; if one of the driver machine interface devices fails, the driver machine interface device which fails actively commands another driver machine interface device to take over interface display task of the entire on-board device and enter an independent display state; or,
if one of the driver machine interface devices detects a fault in another driver machine interface device, the one of the driver machine interface devices actively takes over interface display task of the entire on-board device and enters an independent display state.

17. The hot standby system of the integrated driver machine interface device as claimed in claim 16, wherein the driver machine interfaces of the two driver machine interface devices are provided with switch buttons, which are used to display, when one driver machine interface device fails, the driver machine interface's content on the driver machine interface device which fails on the driver machine interface of another driver machine interface device by clicking the switch button.
